# EUROPEAN PATENT SPECIFICATION

(11) **EP 1 838 110 B1**
(45) Date of publication and mention of the grant of the patent: **17.03.2010**
(21) Application number: 06251604.2
(22) Date of filing: 24.03.2006
(51) Int. Cl.: H04N 13/00, F21S 10/04, F21S 10/00, F21S 4/00

(54) **Three dimensional image presenting apparatus, system and method**
Dreidimensionale Bilddarstellungsvorrichtung, -system und -verfahren
Appareil, système et procédé de présentation d'image tridimensionnelle

(43) Date of publication of application: 26.09.2007
(73) Proprietor: Flap Co. Ltd., Naka-shi, Ibaraki 311-0105 (JP); Kawakami, Kazuiku, Higashiibaraki-gun Ibaraki 311-4311 (JP); Tamura, Shingo, Mito-shi, Ibaraki 311-4153 (JP)
(72) Inventor: Kawakami, Kazuiku, Higashiibaraki-gun Ibaraki 311-4311 (JP); Hara, Masanori, Ibaraki 312-0032 (JP)
(74) Representative: Johnson, Richard Alan

(56) References cited:
- WO-A-01/78410
- WO-A-01/92780
- US-A1- 2002 089 856
- US-A1- 2002 140 631
- US-A1- 2004 223 326

## Description

This invention relates to a three-dimensional pseudo-image presenting apparatus, a method therefor and a three-dimensional pseudo-image presenting system which form and present a pseudo-image three-dimensionally.

In many cases a character is stereoscopically displayed by illumination of the same with light.

Disclosed in Japanese patent application laid-open No. JP-A-2004-298471 is a presentation display controlling apparatus comprising a rotor which has its circumferential surface on which patterns are printed and their corresponding light emitting units arranged on a circular locus with a predetermined radius centered on a rotary axis of the rotor, the presentation display controlling apparatus further comprising a control means controlling a first presentation display means which displays the patterns when the rotor is rotated with the light emitting unit turned off and a second presentation display means which displays afterimages of the patterns when the rotor is rotated with the light emitting unit turned on, the control means controlling the presentation display by switching the first presentation display and the second presentation display.

Disclosed in Japanese patent application laid-open No. JP-A-6(1994)-269535 is a gaming apparatus including a rotor structure, which comprises a rotor having at least one stereoscopically processed composite character formed on its outer circumferential surface, the stereoscopically processed composite character being formed of a stereoscopic image which is obtained by compositing a plurality of original images having continuous parallax, and a lenticular lens for stereoscopically displaying the stereoscopically processed character, the lenticular lens being arranged in proximity to the rotor and located so that the displayed character is easy to see for a game player.

As mentioned above, the characters are formed on the circumferential surface of the rotor in the apparatus disclosed in Japanese patent application laid-open No. JP-A-2004-298471, and the stereoscopic image is formed and presented on the circumferential surface of the rotor in the apparatus disclosed in Japanese patent application laid-open No. JP-A-6(1994)-269535. That is to say, the stereoscopic image or the character is moved on or along a circle centered on the axis of rotation of the rotor.

On the other hand, candles are important for a votive light in the Buddha and God implement industry, for the lighting of a paper-covered lamp in the doll industry, and for the light of blessing in the marriage ceremony industry, respectively. However, the news about an outbreak of the fire resulting from a burning candle is often heard. This indicates that the burning candle is one of dangerous factors which cause a fire.

US-A-2002/0140631 discloses a volumetric display system in which light from a plurality of beam sources is projected onto a rotating screen. The screen has a helical shape such that the image projected by the beam sources is generated in three dimensional space.

US-A-2002/0089856 discloses an animated ornament having inner and outer hollow globes mounted on a housing. The inner globe rotates relative to the outer globe. An image on the surface of the inner globe is projected onto the outer globe by a light bulb inside the inner globe.

According to the invention there is provided pseudo-three-dimensional image display apparatus comprising:
a rotatable screen unit having a rotatable portion carrying an image on a presentation character portion thereof;
a rotary drive source for rotating the rotatable screen unit to thereby define a rotation area containing the rotation axis of the rotatable portion; and
a light illuminator for illuminating the rotatable screen unit with light,
wherein the said image is arranged to form a pseudo-three-dimensional image in the rotation area when the rotatable screen is rotated while being illuminated with the light.

The apparatus may include a housing-like body arranged to contain the rotary drive source;
a controller for controlling the rotary drive source and the light illuminator; and
an electric power supply for the rotary drive source;
wherein the rotatable portion is plate-like and is connected to an output shaft of the rotary drive source such that the rotation area is cylindrical; and
wherein the light illuminator is attached to the body and connected to the electric power supply so as to be located around and below the presentation character portion and to upwardly illuminate the presentation character portion with light emitted from the light illuminator;
whereby the pseudo-three-dimensional image is stereoscopically displayed in the rotation area when the presentation character portion is illuminated with the light emitted from the light illuminator and the rotatable screen unit is rotated.

The invention may further provide a pseudo-three-dimensional image display system comprising a plurality of the pseudo-three-dimensional image display apparatuses described above, wherein each controller is arranged to control its respective light illuminator and rotary drive source so that each rotatable portion is differently illuminated with the emitted light and the number of rotations of each rotatable portion is differently controlled.

The inventor may further provide a method for displaying a pseudo-three-dimensional image, the method comprising:
rotating a rotatable screen unit comprising a rotatable
rotating a rotatable screen unit comprising a rotatable portion carrying an image on a presentation character portion thereof; and
illuminating the rotatable screen unit with light emitted from a light illuminator located around and below the presentation character portion thereby to upwardly illuminate the presentation character portion;
whereby the said image forms a pseudo-three-dimensional image which is stereoscopically displayed in a rotation area defined by rotation of the rotating screen unit, the rotation area including the rotation axis of the rotatable portion.

The present invention may be superior in safety because burning candles are not required for presentation. The present invention is preferably adapted to allow persons to see the three-dimensional pseudo-image in all directions around the apparatus with a high visual effect and a high presentation effect, and therefore may effectively be usable also in the light emitting instrument industry, the soothing or healing lighting industry, the toy industry, the advertising tower, advertising display and interior industries, the supermarket and convenience-store industries, and so on.

Further aims, objectives and preferred features of the invention may become apparent from the descriptions of preferred embodiments of the invention taken in connection with the accompanying drawings.

In the drawings:

FIG. 1 is a longitudinal sectional view of a three-dimensional pseudo-image presenting apparatus showing an embodiment according to the present invention.

FIG. 2 shows an alternative of the rotating screen unit of the three-dimensional pseudo-image presenting apparatus according to the present invention. FIG. 2A is a top plan view of the alternative and FIG. 2B is a front elevation view of the alternative.

FIG. 3 shows another alternative of the rotating screen unit of the three-dimensional pseudo-image presenting apparatus according to the present invention. FIG. 3A is a top plan view of the other alternative and FIG. 3B is a front elevation view of the other alternative.

FIG. 4 shows an additional alternative of the rotating screen unit of the three-dimensional pseudo-image presenting apparatus according to the present invention. FIG. 4A is a front elevation view of a presentation character member of the additional alternative, FIG. 4B is a front elevation view of the additional alternative and FIG. 4C is a side view of the additional alternative.

FIG. 5 shows a further alternative of the rotating screen unit of the three-dimensional pseudo-image presenting apparatus according to the present invention. FIG. 5A is a front elevation view of the further alternative and FIG. 5B is a side view of the further alternative.

FIG. 6 shows a further additional alternative of the rotating screen unit of the three-dimensional pseudo-image presenting apparatus according to the present invention. FIG. 6A is a front elevation view of the further additional alternative and FIG. 5B is a side view of the further additional alternative.

FIG. 7 shows a still further alternative of the rotating screen unit of the three-dimensional pseudo-image presenting apparatus according to the present invention. FIG. 7A is a top plan view of the still further alternative and FIG. 7B is a front elevation view of the still further additional alternative.

FIG. 8 shows yet another alternative of the rotating screen unit of the three-dimensional pseudo-image presenting apparatus according to the present invention. FIG. 8A is a front elevation view of the yet other alternative and FIG. 8B is a side view of the yet other alternative.

FIG. 9 explains a method of assembling the three-dimensional pseudo-image presenting apparatus according to the present invention in connection with the case where the alternative shown in FIG. 4 is used. FIG. 9A is the same front elevation view as showed in FIG. 4A, FIG. 9B is the same front elevation view as shown in FIG. 4B, FIG. 9 C is a front view of a body portion, and FIG. 9D is a front elevation view of the three-dimensional pseudo-image presenting apparatus.

FIG. 10 A is a schematic block diagram of a circuit for use in the three-dimensional pseudo-image presenting apparatus according to the present invention, and FIG. 10B is a view representing electric current waveforms to help explain the operation of the circuit shown in FIG. 10A.

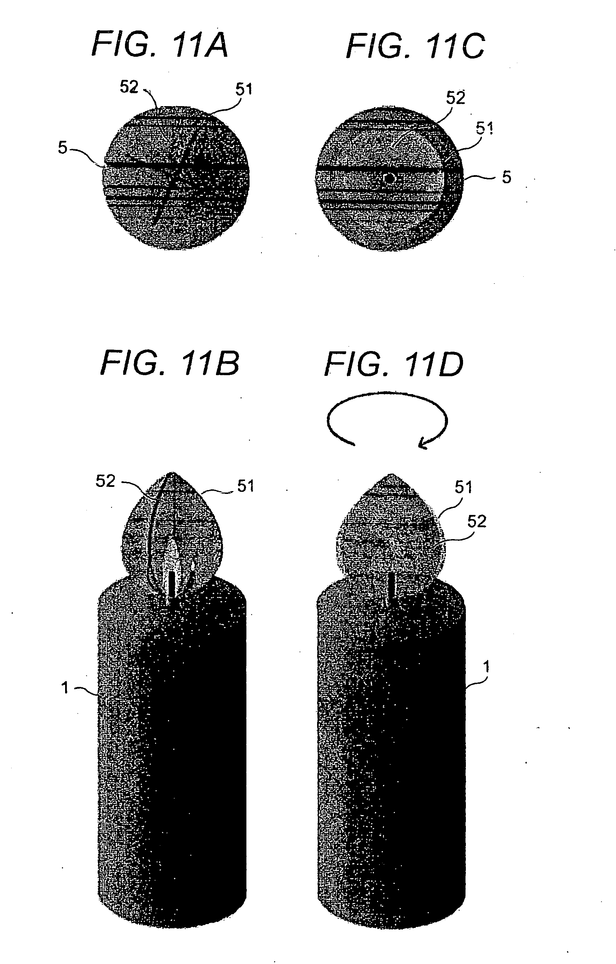

FIG. 11 shows an example of presentation of a three-dimensional pseudo-image of a burning candle flame performed by use of the three-dimensional pseudo-image presenting apparatus according to the present invention. FIG. 11A is a top plan view of the three-dimensional pseudo-image presenting apparatus when the rotating screen unit thereof is not rotated. FIG. 11B is a three-directional front elevation view of the three-dimensional pseudo-image presenting apparatus when the rotating screen unit thereof is not rotated. FIG. 11C is a top plan view of the three-dimensional pseudo-image presenting apparatus when the rotating screen unit thereof is rotated while being illuminated with light.
FIG. 11D is a three-directional front elevation view of the three-dimensional pseudo-image presenting apparatus when the rotating screen unit thereof is rotated while being illuminated with light.

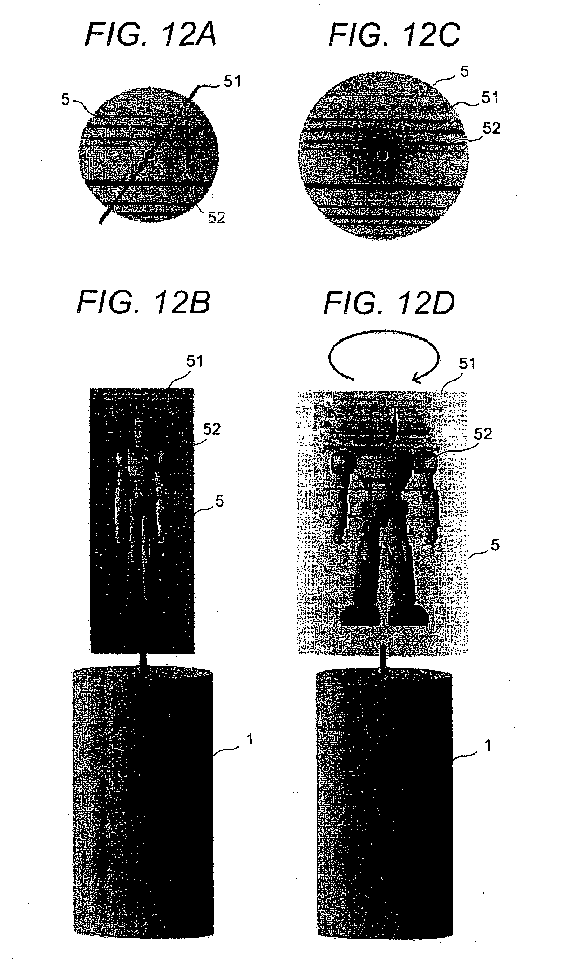

FIG. 12 shows another example of presentation of a three-dimensional pseudo-image on a robot's picture obtained by use of the three-dimensional pseudo-image presenting apparatus according to the present invention. FIG. 12A is a top plan view of the three-dimensional pseudo-image presenting apparatus when the rotating screen unit thereof is not rotated. FIG. 12B is a three-directional front elevation view of the three-dimensional pseudo-image presenting apparatus when the rotating screen unit thereof is not rotated. FIG. 12C is a top plan view of the three-dimensional pseudo-image presenting apparatus when the rotating screen unit thereof is rotated while being illuminated with light. FIG. 12D is a three-directional front elevation view of the three-dimensional pseudo-image presenting apparatus when the rotating screen unit thereof is rotated while being illuminated with light.

FIG. 13 is a front elevation view of a three-dimensional pseudo-image presenting apparatus showing another embodiment according to the present invention.

FIG. 14A is a front elevation view of a three-dimensional pseudo-image presenting apparatus showing a first further embodiment according to the present invention, FIG.14B is a front elevation view of a three-dimensional pseudo-image presenting apparatus showing a second further embodiment according to the present invention, and FIG. 14C is a front elevation view of a three-dimensional pseudo-image presenting apparatus showing a third further embodiment according to the present invention.

FIG. 15 is a front elevation view of a three-dimensional pseudo-image presenting apparatus showing a still further embodiment according to the present invention.

### [Embodiment 1]

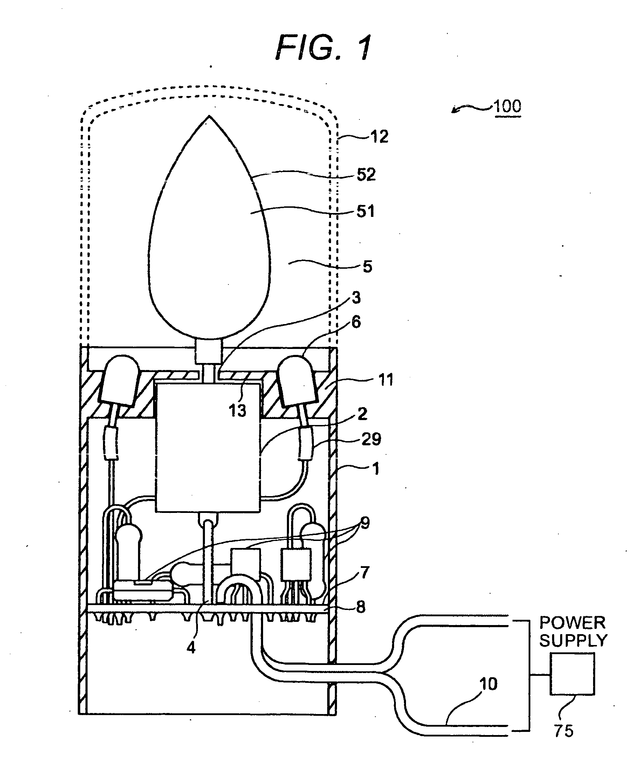

Referring to FIG. 1, a three-dimensional pseudo-image presenting apparatus 100 comprises a housing-like cylindrical body 1, a motor 2 which functions as a rotary drive source and is secured to the body 1 so as to be arranged therein, a rotating screen unit 5 (which functions as an object of presentation) connected to an output shaft 3 of the motor 2, a light illuminator 6 attached to the body 1 so as to be arranged therein, controller 7, and a power cable 10 connected to an electric power supply 75.

The rotating screen unit 5 comprises a rotating portion 51 and a presentation character portion 52 provided with a presentation character. The rotating portion 51 and the presentation character portion 52 are formed in one, that is to say, are integrated with each other.

The rotating portion 51 and the presentation character portion 52 each comprise a thin plate-like member whose shape is similar to a vertical sectional shape of the flame of a burning candle. In this embodiment, the rotating portion 51, the presentation character portion 52 and the presentation character that the presentation character portion 52 has are the same in shape and are integrated with each other.

The body 1 may be a structure of a gaming apparatus. In this case, the light illuminator 6 may be so constituted as to illuminate the rotating screen unit 5 from above and/or below. This construction may be used as being suitable for a large-sized three-dimensional pseudo-image presenting apparatus.

The body 1 contains a base plate or substrate 8 on which various electronic parts 9 are fixedly placed. The body 1 further contains a controller 7 which is constituted by the electric parts 9 and the substrate 8. As the electric power supply, a battery may be used. In this case, the cable 10 is not required. Reference numeral 29 designates a connecting terminal.

The motor 2 is supported by a support 4 fixed to both of the substrate 8 and the lower end of the motor. The upper end portion of the motor 2 is fitted in a recess 12 of a light illuminator supporting base plate 11 so as not to move therein, thereby resulting in the stable fixation of the motor 2.

The light illuminator 6 comprises a plurality of light emitters disposed in recesses of the light illuminator supporting base plate 11 which are arranged on or along a circle centered on the output shaft 3 of the motor 2 around the rotating screen unit 5, though the light emitters may be arranged on or along circles with different radius from each other centered on output shaft 3 of the motor 2. The number of the light emitters is one or more. If the number of the light emitters is increased, the brightness of illumination may be increased. Preferably, a plurality of light emitters are arranged at a substantially equal angular-interval around the rotating screen unit 5. Further, a plurality of light emitters may be arranged in the vicinity of each of the positions which are disposed at a substantially equal angular-interval around the rotating screen unit 5.

The following points are important the position of arrangement of the light emitters and the direction of illumination of the presentation character portion with light emitted from the light emitters. It is not visibly desirable to arrange the light emitters just laterally to the presentation character portion 52. Therefore, the light emitters are obliquely arranged around and below the presentation character portion 52 so as to upward illuminate the presentation character portion 52 with the light emitted from the light emitters.

Further, the light emitters are arranged close to the presentation character portion 52 as much as possible below the same so that the rotation of the presentation character portion 52 with the light is not obstructed. As the light emitters, high-intensity light emitting diodes are used which emit light in red, green and blue, i. e., the three primary colors. However, other light emitting elements may be used.

As indicated by broken lines, a hood 12 may be used for covering the rotating screen unit 5.

The rotating portion 51 is shaped like a thin plate. The presentation character portion 52 is formed in one along and with the thin plate-like rotating portion 51. Therefore, when the presentation character portion 51 is rotated, the presentation character portion 52 is rotated with it integrated with the presentation character portion 51 in a cylindrical rotation area formed or defined on the basis of the rotation of the rotating portion 51. As shown in FIG. 1, where the rotating portion 51 and the presentation character portion 52 are integrated with each other, the rotation area on the basis of the rotation of the rotating portion 51 and that on the basis of the rotation of the presentation character portion 52 coincide with each other. The axis rotation of the cylindrical rotation area is extended vertically, i. e., in an up-and-down direction, and hence the rotation axes of the output shaft 3, the rotating portion 51 and presentation character portion 52 are also extended in the up-and-down direction.

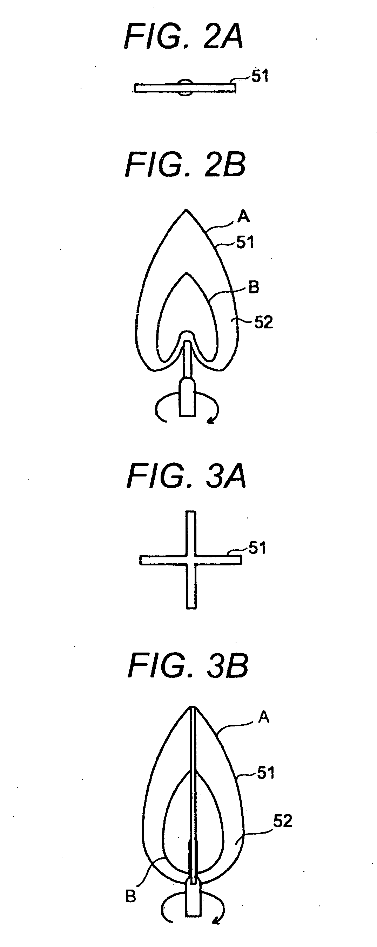

FIG. 2 shows an alternative of the rotating screen unit of the three-dimensional pseudo-image presenting apparatus according to the present invention. In this alternative, the rotating portion 51 comprises a thin plate-like member. The rotating portion 51 has its shape similar to a vertical sectional shape of the flame of a burning candle.

The corresponding portion of the rotating member 5.1 to a vertical sectional shape of the outer flame takes on a light orange tinge and the corresponding portion of the rotating member 51 to a vertical sectional shape of the inner flame takes on a blue tinge. Consequently, when the presentation character portion is rotated on its axis of rotation while being light-illuminated, a three-dimensional pseudo-image of the presentation character portion 52 having the presentation character is formed and presented as a two-color pseudo-flame of a burning candle having a low temperature pseudo-outer flame portion (A) taking on a light orange tinge and a high temperature pseudo-inner flame portion (B) taking on a blue tinge in the rotation area of the rotating screen portion 5 as if a real burning candle flame was actually seen or observed.

FIG. 3 shows another alternative of the rotating screen unit of the three-dimensional pseudo-image presenting apparatus according to the present invention. The rotating portion 51 comprises a cross-shaped member. As in the alternative shown in FIG. 1, a two color three-dimensional pseudo-image is formed and presented as a two-color three-dimensional pseudo-flame of a burning candle having a low temperature three-dimensional pseudo-outer flame portion (A) taking on a light orange tinge and a high temperature three-dimensional pseudo-inner flame portion (B) taking on a blue tinge in the rotation area of rotating portion 51.

] As to the presentation effect of the presentation character, the alternatives shown in FIGS. 1 and 2 are substantially the same as each other. Alternatively, the corresponding portion of the rotating portion 51 to a vertical sectional shape of the inner flame may be removed from the rotating portion 51 so that the three-dimensional pseudo-inner flame is formed on the basis of rotation of the unfilled portion formed in the rotating portion 51.

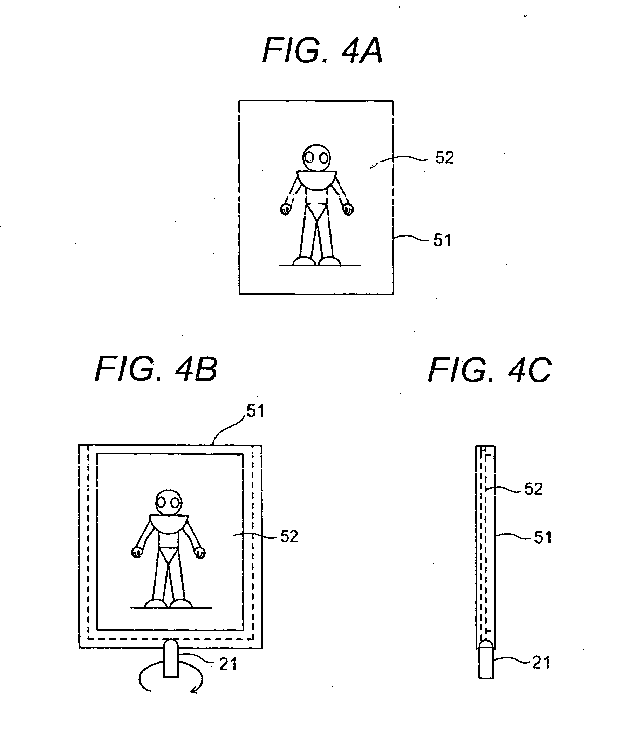

FIG.4 shows an additional alternative of the rotating screen unit of the three-dimensional pseudo-image presenting apparatus according to the present invention. The rotating portion 51 comprises a card holder, which is secured to the output shaft 3 through a holder axis 21 of the rotating portion 51. The presentation character portion 52 has a presentation character. Specifically, the presentation character comprises a pattern or picture, which is drawn on the presentation character portion 52. In this alternative, the presentation character portion 52 is separable from the rotating portion 51.

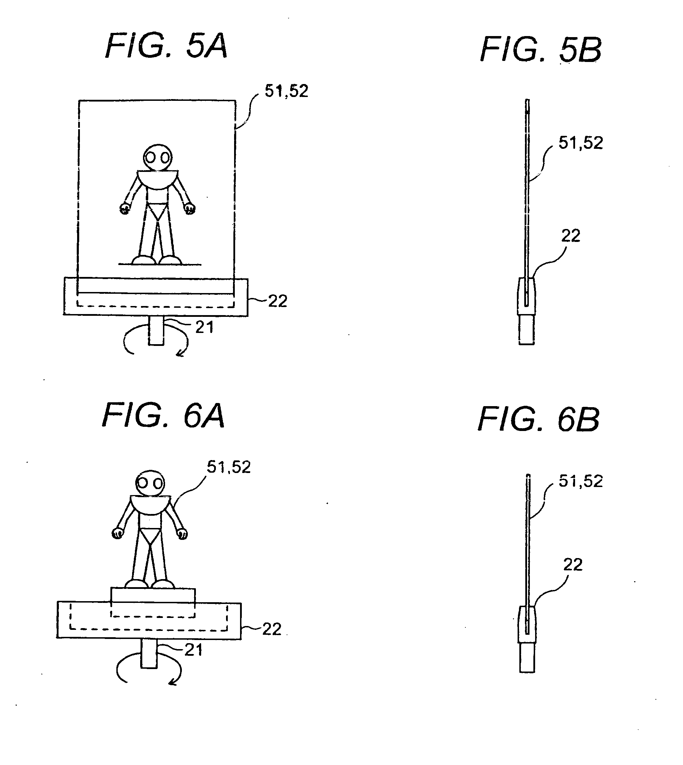

FIG. 5 shows a further alternative of the rotating screen unit of the three-dimensional pseudo-image presenting apparatus according to the present invention. The rotating portion 51 is also the presentation character portion 52, which comprises a card on which the presentation character is formed. The card is removably held with a card clip 22 fixed to the output shaft 3 through the holder axis 21.

FIG. 6 shows a further additional alternative of the rotating screen unit of the three-dimensional pseudo-image presenting apparatus according to the present invention. The presentation character portion 52 comprises a card on which the presentation character portion is formed. The card has the same shape as that of the presentation character and is removably held with a card clip 22 fixed to the output shaft 3 through the holder axis 21. As is apparent, the card functions also as the rotating portion 51 and the presentation character portion 52.

According to the alternatives shown in FIGS. 5 and 6, because the card is removably held with the card clip 22, pseudo-images of various kinds of presentation characters can be formed and presented three-dimensionally through card exchange.

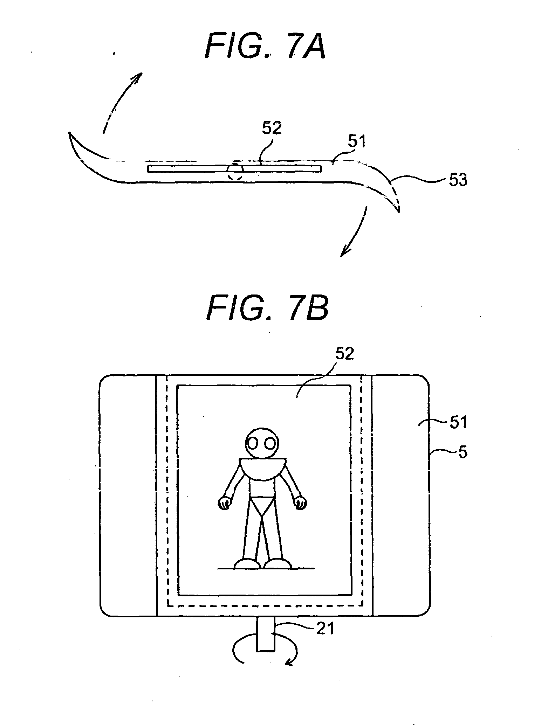

FIG. 7 shows a still further alternative of the rotating screen unit of the three-dimensional pseudo-image presenting apparatus according to the present invention. This alternative is substantially the same as that shown in FIG. 4 except that the rotating portion 51 has in its side ends vanes making a wind by their rotation.

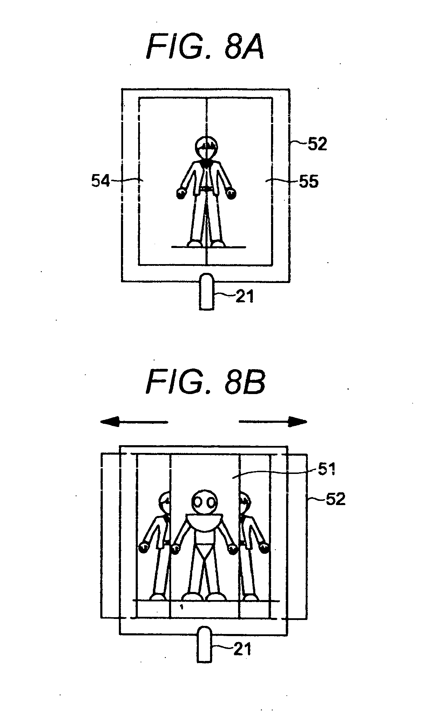

FIG. 8 shows yet another alternative of the rotating screen unit of the three-dimensional pseudo-image presenting apparatus according to the present invention. This alternative comprises a slide door type cover on which a character different from the presentation character is formed. When the presentation character portion 52 is in a still state, the slide door type cover covers the presentation character and the character formed on the slide door type cover can be seen. When the presentation character portion 52 is rotated, the slide door type cover is slid and opened by centrifugal force, so that the presentation character can be seen.

Specifically, the slide door type cover comprises first and second plate-like slide members 54 and 55 over which the character extends. When the presentation character portion 52 is in a still state, the first and second plate-like slide members 54 and 55 are closed, so that the character formed on the first and second plate-like slide members 54 and 55 can be seen but the presentation character is covered by the first and second plate-like slide members 54 and 55. On the other hand, when the presentation character portion 52 is rotated, the first and second plate-like slide members 54 and 55 are opened sliding away from each other by centrifugal force, so that the presentation character can be seen.

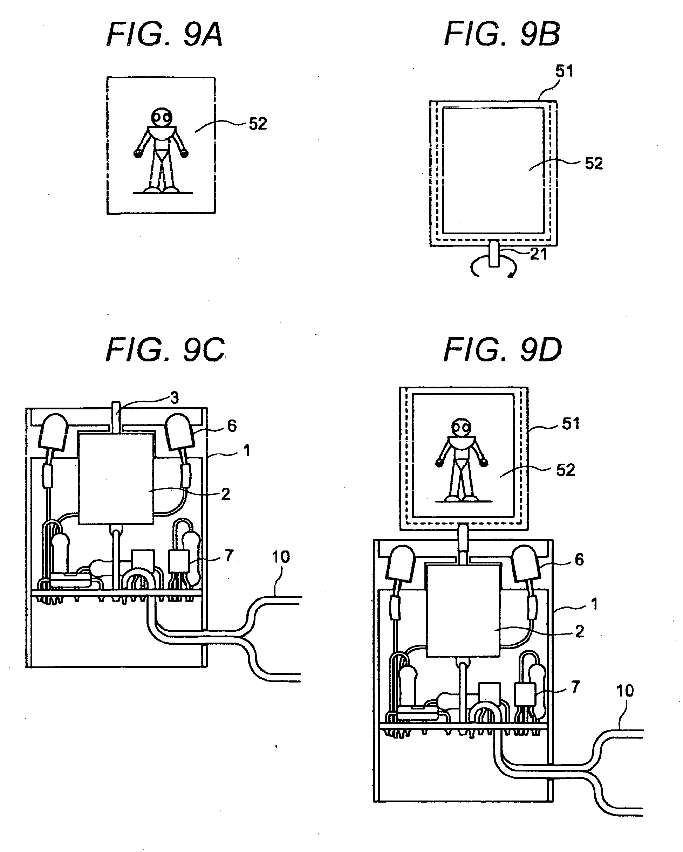

FIG. 9 explains a method of assembling the three-dimensional pseudo-image presenting apparatus according to the present invention in connection with the case where the alternative shown in FIG. 4 is used. The card 52 (FIG. 9A) on which the pattern or picture is drawn is attached to the rotating portion 51 (FIG. 9B), and then the rotating portion 51 is fixed to the output shaft 3 (FIG. 9C) through the holder axis 21, whereby the assembly is completed (FIG. 9D).

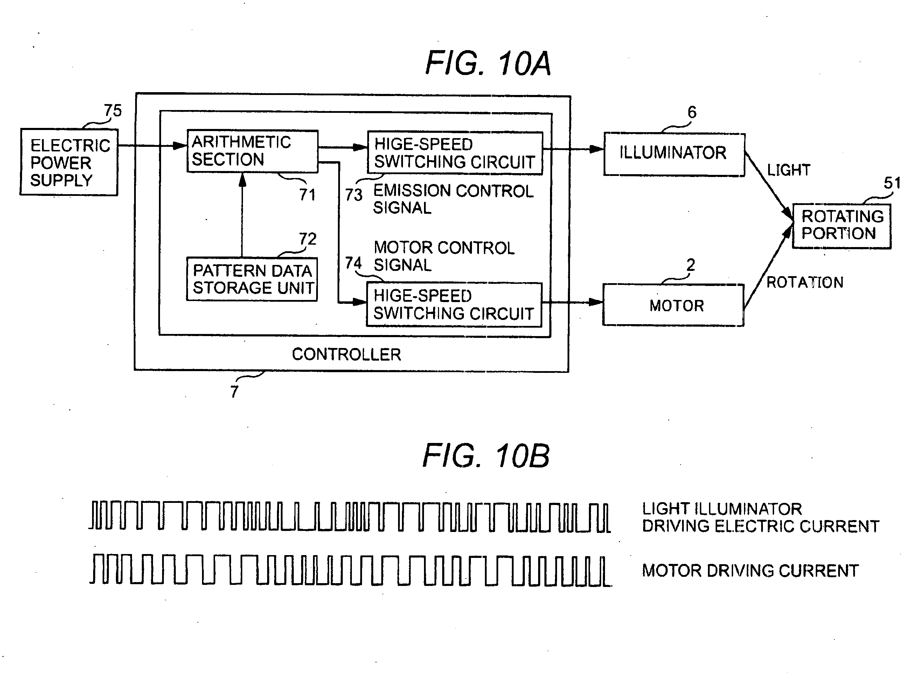

Referring to FIG. 10, the controller 7 connected to an electric power supply 75 comprises an arithmetic section 71, a pattern data storage unit 72, and a high speed switching circuits 73 and 74. The arithmetic section reads out data from the pattern data storage unit 72 and outputs the data to the high speed switching circuits 73 and 74 to drive the light illuminator 6 and the motor 2.

The motor 2 drives a rotation portion 51 including the output shaft 3, the holder axis 21 and the rotating screen unit 5, and the illuminator 6 illuminates the rotating screen unit with the light emitted from the light illuminator 6. The arithmetic section 71 calculates the brightness of the light to be emitted from the light illuminator 6 and the number of rotations of the presentation character portion at which the presentation character portion is to be rotated.

As a result, the switching circuits 73 and 74 drive and ON-OFF-control the light illuminator 6 and the motor 2 on the basis of a light illuminator driving current and a motor driving current as shown in FIG. 10B, respectively, whereby a cycle on which the light is emitted is controlled. The same is true for the case where three-primary-color light is used as the light to be emitted from the light illuminator 6.

The switching control of the current for the illuminator 6 is performed at high speed so that illumination is recognized not as ON-OFF but as light-darkness by human eyes. The ON-OFF switching control of the current for the motor 2 results in the change in the number of rotations of the motor 2 and not in ON-OFF of the rotation thereof, because the motor is rotated according to inertia even when the current for the motor is turned off.

FIG. 11 shows an example of presentation of a three-dimensional pseudo-image of a burning candle flame performed by use of the three-dimensional pseudo-image presenting apparatus according to the present invention. The rotating portion 51 comprises a cross-shaped member having first and second plate-like members which cross each other at a right angle. The first and second plate-like members each have an ellipse-like shape similar to a vertical sectional shape of the flame of a burning candle. The central portion of the first and second plate-like members has an ellipse-like shape similar to a vertical section of the inner flame portion of the burning candle flame.

As shown in FIGS. 11A and 11B, when the rotating screen unit 5 is not rotated and is in a still state, the similar ellipse-like shapes of the rotating screen unit 5 to the vertical sectional shapes of the inner and outer flame portions of the burning candle flame are merely seen as they are. As shown in FIGS. 11C and 11D, when the rotating screen unit 5 is rotated while being illuminated, a three-dimensional pseudo-image of the presentation character portion 52 is formed and presented according to the visual afterimage effect in the rotation area formed by the rotation of the rotating screen unit 5 as if a real burning candle flame was actually formed and observed in the state where the outer and inner flame portions thereof are substantially discriminated visually between each other. In particular, if the corresponding portion of the rotating portion 51 to the inner flame portion of the burning candle flame is colored more brightly than the corresponding portion of the rotating member 51 to the outer flame portion of the burning candle flame, the feelings that the real candle is actually burned can be approached more.

The rotating portion 51 and the presentation character portion 52 each have its own axis of rotation which coincides with each other and also with the rotation axis of the output shaft 3. The presentation character is symmetrical with respect to a certain axis, i. e., a predetermined axis, which coincides with the rotation axis of the output shaft 3. Namely, the similar ellipse-like shapes of the rotating screen unit 5 to the vertical sectional shapes of the inner and outer flame portions of the burning candle flame are symmetrical with respect to the rotation axis of the output shaft 3 and hence the axis of rotation of the presentation character. Therefore, the three-dimensional pseudo-image, i. e., the pseudo-burning candle flame can be seen or observed without sway or flickering, with the pseudo-inner flame portion formed inside of the pseudo-outer flame portion.

On the other hand, if the presentation character is asymmetrical with respect to the predetermined axis, the pseudo-burning candle flame can be seen or observed as if the real burning candle flame was flickered because the upper portion of the pseudo-burning candle flame is swayed with rotation of the presentation character. Such flame sway or flickering is caused also when the presentation character that is symmetrical with respect to the certain axis is rotated in a slightly eccentric state, that is, when the predetermined axis is slightly shifted from the axis of rotation of the presentation character and hence the rotation axis of the output shaft 3.

### [EXAMPLES]

The following table indicates that the magnitude of the flame sway or flickering varies according to whether the presentation character is symmetrical or asymmetrical with respect to the rotation axis of the output motor shaft 3 and whether or not those two portions of the presentation character the boundary of which is defined by the rotation axis of the output shaft 3 are equal in area to each other.

| Symmetrical/Asymmetrical | Area | Flame flicker |
|---|---|---|
| Asymmetrical | Nearly equal | Small |
| Asymmetrical | Different | Large |
| Symmetrical | Nearly equal | Nothing |

If that portion corresponding to the wick of the pseudo-burning candle flame which is drawn on the right and rear surfaces is changed in size so that the wick is changed in thickness, the sway or flickering of the pseudo-burning candle flame in the vicinity of the wick thereof can be changed so that the presentation effect is thereby changed. Therefore, if, in a state where a real candle is burned, the change in brightness of the flame formed thereby is measured, flickering pattern data is prepared on the basis of the measures results so as to be stored in the pattern data storage unit 72, and then the stored data is used in combination with the illumination of the rotating screen unit 5 with the light emitted from the illuminator 6, the sway or flickering of light that the actual burning candle flame emits can be reproduced. Thus, if the sway or flickering of the light and that of the flame are used in combination with each other, a pseudo-three dimensional image similar to the real candle flame burning actually in the natural environment can be presented. The sway or flickering of the light and that of the flame can be generically referred to as "visual sway or flickering".

FIG. 12 shows another example of presentation of a three-dimensional pseudo-image on a robot's picture obtained by use of the three-dimensional pseudo-image presenting apparatus according to the present invention. As shown in FIGS. 12A and 12B, the robot's picture and the background of the rotating portion 51 are seen independently when the rotating portion 51 is in a still state. On the other hand, when the rotating member 51 is rotated as shown in FIGS. 12C and 12D, the background becomes hard to see and a pseudo-three dimensional image of the robot's picture comes to be seen with it harmonizing with the background. In other wards, because the robot's picture is rotated on its own rotation axis, the pseudo-three dimensional image of the robot's picture comes to be seen as the afterimage thereof with a high visual effect and a high presentation effect as if presentation was stereoscopically performed in the rotation area of the rotating screen unit 5 when the robot's picture is illuminated with the light from the illuminator.

In FIG. 12, though the robot's picture is so drawn to be symmetrical with respect to the rotation axis of the rotating member 51, the robot's picture may be stereoscopically presented as if a real robot exited in the rotation area as a pseudo-three dimensional image with the robot's picture drawn asymmetrically so that the position of its arms differs from each other, for example, in the up-and-down direction. Further, even where the presentation character is a completely asymmetric planar picture like a monster, it can be stereoscopically presented in the rotation area of the rotating portion 51. The same is true for the presentation character portion comprising the picture of a child who is playing using a ball.

Those who see the three-dimensional pseudo-image can see it right in their front, even though it is seen or observed in any direction within the angular range of 360 degrees around the pseudo-image. In this case, because the three-dimensional pseudo-image can be positioned at any place in the rotation area, the stereoscopic effect of the three-dimensional pseudo-image can be enhanced by a suitable selection of the place at which the three-dimensional pseudo-image is positioned. If the contrast between the character and the background is increased, the pseudo-stereoscopic effect is further improved. Further, when the intensity of light emitted from the light illuminator 6 is so controlled as to change the brightness of the three-dimensional pseudo-image, the pseudo-stereoscopic effect can be emphasized.

Where the three-dimensional pseudo-image is based on the burning candle flame, the rotating screen unit is of a flame type. If the rotating portion is illuminated with light whose various colors are program-controlled, the three-dimensional pseudo-flame having the presentation effect due to sway or flickering can be presented.

Though the above explanation is made in connection with the presentation character portion comprising the picture-like character or the pattern-like character, the presentation character portion may have a character such as letters, an arrow indicating a direction, and so on. Further, the presentation character may be colored.

As described above, according to the embodiment of the present invention, a three-dimensional pseudo-image presenting apparatus is provided which comprising a housing-like body 1; a motor 2 arranged in the body 1; an electric power supply for the motor 1; a rotating screen unit 5 comprising a plate-like rotating portion 51 connected to an output shaft 3 of the motor 2 and a presentation character portion 52 formed in one along and with the plate-like rotating portion 51, and the rotating screen unit 5 defining a cylindrical rotation area on the basis of rotation of the rotating screen unit 6; a light illuminator 6 attached to the body 1 and connected to the electric power supply so as to be projected from the body and located around and below the presentation character portion 52, and to upward illuminate the presentation character portion 52 with light emitted from the light illuminator 6; and a controller 7 for controlling the motor 2 and the light illuminator 6; wherein a three-dimensional pseudo-image is stereoscopically presented in the rotation area when the presentation character portion 52 is illuminated with the light emitted from the light illuminator 6 and the rotating screen unit 5 is rotated.

According to the embodiment, a method is also provided for a three-dimensional pseudo-image presenting apparatus having a housing-like body 1; a motor 2 arranged in the body 1; an electric power supply 75 for the motor 2; a rotating screen unit 5 comprising a rotating portion 51 connected to an output shaft of the motor 2 and a presentation character portion 52 formed in one with the rotating portion 51; a light illuminator 6 attached to the body and connected to the electric power supply 75 so as to be projected from the body 1 and located around and below the presentation character portion 52 and to upward illuminate the presentation character portion 52 with light emitted from the light illuminator 6; and a controller 7 for controlling the motor 2 and the light illuminator 6; wherein a three-dimensional pseudo-image is stereoscopically presented in a rotation area defined on the basis of rotation of the rotating screen unit 5 when the presentation character portion 52 is illuminated with the light emitted from the light illuminator 6 and the rotating screen unit 5 is rotated; the method comprising the steps of rotating the rotating screen unit 5, and illuminating the rotating screen unit 5 with the light emitted from the light illuminator 6, whereby a three-dimensional pseudo-image is formed and presented in a rotation region defined on the basis of rotation of the rotating screen unit 5.

### [EMBODIMENT 2]

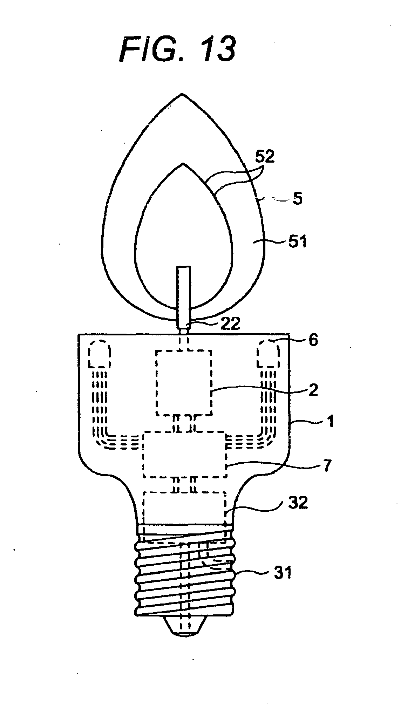

FIG. 13 shows a three-dimensional pseudo-image presenting apparatus of another embodiment according to the present invention. This embodiment is characteristic in that the body is of a cylindrical light bulb type. In FIG. 13, the same reference numerals as in the other figures indicate the same elements.

Provided at the opposite end portion of the body 1 to the output shaft 3 is a metal base 31 to be screwed in a light bulb socket for supplying the power. The base metal is connected to an AC/DC converter 32 and further a controller 7.

When the base metal 31 is screwed in the light bulb socket to which an AC voltage of 100 V (200 V) is applied, the voltage is converted into a DC voltage of about 5 V. The DC converted signal is used for controlling the luminescence and illumination of the illuminator 6 and the number of the rotations of the motor 2.

### [EMBODIMENT 3]

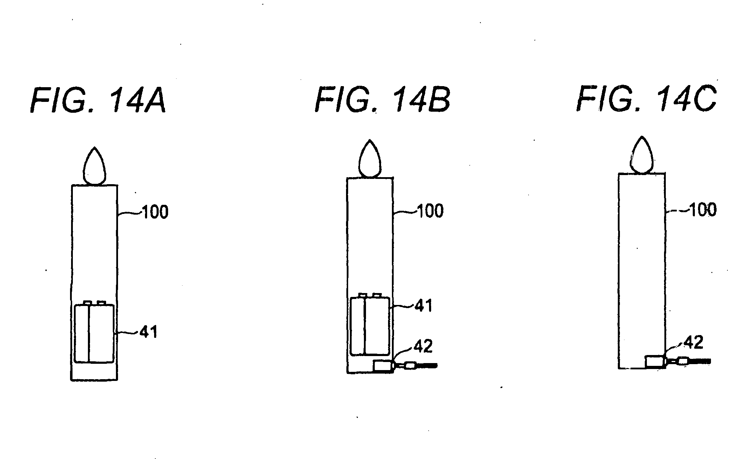

FIG. 14 shows three-dimensional pseudo-image presenting apparatuses of further embodiments according to the present invention. FIG. 14A indicates an embodiment using a built-in battery 41 as the electric power supply, FIG. 14B indicates another embodiment selectively switching and using a built-in battery 41 and an external power supply, and FIG. 14C indicates still another embodiment using an external power supply. In FIG. 14, a reference numeral 42 designates an input terminal for the external power supply.

### [EMBODIMENT 4]

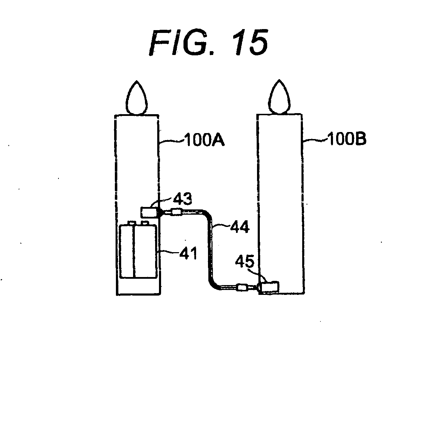

FIG. 15 shows a three-dimensional pseudo-image presenting apparatus of a still further embodiment according to the present invention. FIG. 15 indicates an embodiment juxtaposing and using a plurality of the three-dimensional pseudo-image presenting apparatuses 100 A and 100B which are each explained above as the embodiment 1. The internal battery 41 built in the three-dimensional pseudo-image presenting apparatus 100A is used as an electric power supply for the three-dimensional pseudo-image presenting apparatus 100B. To this end, the internal battery 41 is connected to a power supply input terminal 45 of the three-dimensional pseudo-image presenting apparatus 100B through a power supply external terminal 43 of the three-dimensional pseudo-image presenting apparatus 100A and then a electric cord 44. According to this embodiment, the power supply can be reduced in scale. When the power supply may be increased in scale, it is also possible to use the three-dimensional pseudo-image presenting apparatuses 100 shown in FIG. 14A, 14B and 14C and to connect and use the power supplies thereof in series or in parallel.

The controller for one of the three-dimensional pseudo-image presenting apparatuses may double as that for the other thereof to perform the program control of both the three-dimensional pseudo-image presenting apparatuses.

The presentation character may be a character modeled on a flame or a toy; a cartoony character; a picture-like character; a pattern-like character; a character such as Japanese characters, Chinese characters, phonograms, letters, or the like; a character such as an arrow indicating a direction; or the like. These characters may be colored so that the presentation effect is increased. The presentation character portion may also be of a type that emits light in response to light-illumination so that the presentation effect is further improved. According to the above-mentioned embodiments, there are merits that the three-dimensional pseudo-image can be easily presented with a high presentation effect and a high visual effect, manufacture or production cost is cheap and safety is high.

The above examples of presentation may be combined with the other examples of presentation.

It is obvious to a skilled person that changes and modifications can be made to the above-described details without departing from the scope of the present invention, as set out in the accompanying claims, when interpreted using the description and drawings.

## Claims

1. Pseudo-three-dimensional image display apparatus (100) comprising:
a rotatable screen unit (5) having a rotatable portion (51) carrying an image on a presentation character portion (52) thereof;
a rotary drive source (2) for rotating the rotatable screen unit (5) to thereby define a rotation area containing the rotation axis of the rotating portion (51); and
a light illuminator (6) for illuminating the rotatable screen unit (5) with light,
wherein the said image is arranged to form a pseudo-three-dimensional image in the rotation area when the rotatable screen unit (5) is rotated while being illuminated with the light.

2. Apparatus according to claim 1, wherein the rotation axis extends in an up-and-down direction.

3. Apparatus according to claim 1 including:
a housing-like body (1) arranged to contain the rotary drive source (2);
a controller (7) for controlling the rotary drive source (2) and the light illuminator (6); and
an electric power supply (75) for the rotary drive source (2);
wherein the rotatable portion (51) is connected to an output shaft (3) of the rotary drive source (2); and
the light illuminator (6) is attached to the body (1) and connected to the electric power supply (45) so as to be located around and below the presentation character portion (52) and to upwardly illuminate the presentation character portion (52) with light emitted from the light illuminator (6);
whereby the pseudo-three-dimensional image is stereoscopically displayed in the rotation area when the presentation character portion (52) is illuminated with the light emitted from the light illuminator (6) and the rotatable screen unit (5) is rotated.

4. Apparatus according to claim 3, wherein the rotatable portion (51) is plate like and, when rotating, its rotation area is cylindrical.

5. Apparatus according to claim 4, wherein the rotatable portion (51) comprises a thin plate-like member or a cross-shaped thin plate-like member.

6. Apparatus according to claim 5, wherein the presentation character portion (52) is directly drawn or affixed on the thin plate-like member or the cross-shaped thin plate-like member.

7. Apparatus according to claim 4, wherein the presentation character portion (52) comprises a picture and the rotatable portion (51) is composed of a card cut out to have the same shape as the picture.

8. Apparatus according to claim 4, wherein the light illuminator (6) comprises two to four light emitters arranged at a substantially equal angular-interval.

9. Apparatus according to claim 8, wherein each light emitter is arranged to selectively emit light having one of the three primary colours, the controller (7) being arranged to control a cycle by which the primary color light emitted by a light emitter is selected.

10. Apparatus according to claim 4, wherein the rotatable portion (51) includes first and second door members (54, 55), the first and second door members (54, 55) being openable by sliding away from each other under a centrifugal force so that the presentation character portion (52) is displayed when the rotatable portion (51) is rotated, the first and second door members (54, 55) being arranged to cover the presentation character portion (52) when the first and second door members (54, 55) are closed.

11. Apparatus according to claim 4, wherein the body (1) is shaped like a light bulb and is provided with a metal base (31) arranged to be screwed in a light bulb socket, the metal base (31) being provided at an opposite end of the body (1) to the output shaft (3).

12. Apparatus according to any one of claims 4 to 11,
wherein the electric power supply (75) and the controller (7) are arranged in the body (1).

13. A pseudo-three-dimensional image display system comprising a plurality of the pseudo-three-dimensional image display apparatuses (100) according to claim 4, wherein each controller (7) is arranged to control its respective light illuminator (6) and rotary drive source (2) so that each rotatable portion (51) is differently illuminated with the emitted light and the number of rotations of each rotatable portion is differently controlled.

14. Apparatus according to claim 3, wherein the rotatable portion (51) has its shape similar to a vertical sectional shape of an outer flame of a burning candle, and the presentation character portion (52) has its shape similar to a vertical sectional shape of an inner flame of the burning candle.

15. Apparatus according to any one of claims 3 to 14,
wherein the image comprises a character modeled on a flame or a toy; a cartoon character; a picture-like character; a pattern-like character; a character such as Japanese characters, Chinese characters, phonograms or letters; or a character such as an arrow indicating a direction.

16. Apparatus according to claim 3, wherein the presentation character portion (52) is symmetrical or asymmetrical with respect to a predetermined line.

17. A method for displaying a pseudo-three-dimensional image, the method comprising:
rotating a rotatable screen unit (5) comprising a rotatable portion (51) carrying an image on a presentation character portion (52) thereof; and
illuminating the rotatable screen unit (5) with light emitted from a light illuminator (6) located around and below the presentation character portion (52) thereby to upwardly illuminate the presentation character portion (52);
whereby the said image forms a pseudo-three-dimensional image which is stereoscopically displayed in a rotation area defined by rotation of the rotating screen unit, the rotation are including the rotation axis of the rotatable portion (51).

18. Apparatus according to claim 1 or 2, wherein the image comprises a presentation character, and the displayed pseudo-three-dimensional image is a three-dimensional image of the presentation character.

19. Apparatus according to claim 18, wherein the presentation character is symmetrical or asymmetrical with respect to a predetermined axis, the predetermined axis coinciding substantially with the rotation axis.

## Patentansprüche

1. Pseudo-dreidimensionale Bildanzeigevorrichtung (100) mit:
einer drehbaren Schirmeinheit (5), bestehend aus einem drehbaren Teil (51), das ein auf einem Darstellteil (52) befindliches Bild trägt;
einer Drehantriebsquelle (2) zum Rotieren der drehbaren Schirmeinheit (5), um den die Rotationsachse des drehenden Teils (51) beinhaltenden Rotationsbereich zu definieren; und
einer Lichtbeleuchtung (6) zur Beleuchtung der drehbaren Schirmeinheit (5) mit Licht,
wobei das Bild so ausgelegt ist, dass es dann, wenn die drehbare Schirmeinheit (5) gedreht und währenddessen mit Licht bestrahlt wird im Rotationsbereich ein pseudo-dreidimensionales Bild erzeugt.

2. Vorrichtung nach Anspruch 1, wobei die Rotationsachse in einer Auf-/Abwärtsrichtung verläuft.

3. Vorrichtung nach Anspruch 1 mit:
einem gehäuseartigen Aufbau (1), der so gestaltet ist, dass er die Drehantriebsquelle (2) enthält;
einer Steuerung (7) zum Steuern der Drehantriebsquelle (2) und der Lichtbeleuchtung (6); und
einer elektrischen Stromversorgung (75) für die Drehantriebsquelle (2);
wobei der drehbare Teil (51) mit der Antriebswelle (3) der Drehantriebsquelle (2) verbunden ist; und
die Lichtbeleuchtung (6) so an dem Aufbau (1) befestigt und mit der elektrischen Stromversorgung (45) verbunden ist, dass sie unterhalb des Darstellteils (52) und um dieses herum angeordnet ist und den Darstellteil (52) mit von der Lichtbeleuchtung (6) abgestrahltem Licht aufwärtsgerichtet beleuchtet;
wobei das pseudo-dreidimensionale Bild im Rotationsbereich räumlich dargestellt wird, wenn der Darstellteil (52) mit von der Lichtbeleuchtung (6) abgestrahltem Licht beleuchtet und die drehbare Schirmeinheit (5) rotiert wird.

4. Vorrichtung nach Anspruch 3, wobei der drehbare Teil (51) plattenförmig und sein Rotationsbereich bei Drehung zylindrisch ist.

5. Vorrichtung nach Anspruch 4, wobei der drehbare Teil (51) ein dünnes plattenförmiges Element oder ein kreuzförmig ausgebildetes dünnes plattenförmiges Element enthält.

6. Vorrichtung nach Anspruch 5, wobei der Darstellteil (52) auf dem dünnen plattenförmigen Element oder dem kreuzförmig ausgebildeten dünnen plattenförmigen Element direkt aufgemalt oder daran angebracht ist.

7. Vorrichtung nach Anspruch 7, wobei der Darstellteil (52) ein Bild enthält und der drehbare Teil (51) aus einer Karte aufgebaut ist, die auf die selbe Form wie das Bild zugeschnitten ist.

8. Vorrichtung nach Anspruch 4, wobei die Lichtbeleuchtung (6) zwei bis vier Lichtemitter enthält, die in einem im Wesentlichen gleichbleibenden Winkelabstand angeordnet sind.

9. Vorrichtung nach Anspruch 8, wobei jeder Lichtemitter so ausgelegt ist, dass dieser wahlweise ein Licht abstrahlt, das eine der drei Grundfarben besitzt und die Steuerung (7) so ausgelegt ist, dass sie einen Zyklus steuert, in dem das von einem Lichtemitter abgestrahlte Grundfarbenlicht ausgewählt wird.

10. Vorrichtung nach Anspruch 4, wobei der drehbare Teil (51) erste und zweite Türelemente (54, 55) beinhaltet, die dadurch zu öffnen sind, dass sie unter einer Zentrifugalkraft auseinandergleiten, so dass der Darstellteil (52) durch Rotieren des drehbaren Teils (51) dargestellt wird, wobei die ersten und zweiten Türelemente (54, 55) so angeordnet sind, dass sie im geschlossenen Zustand den Darstellteil (52) verdecken.

11. Vorrichtung nach Anspruch 4, wobei der Aufbau (1) wie eine Glühbirne geformt und mit einem in eine Glühbirnenfassung einschraubbaren Metallsockel (31) versehen ist, der an einem bezüglich der Antriebswelle (3) gegenüberliegendem Ende des Aufbaus (1) vorgesehen ist.

12. Vorrichtung nach einem der Ansprüche 4 bis 11, wobei die elektrische Stromversorgung (75) und die Steuerung (7) innerhalb des Aufbaus (1) angeordnet sind.

13. Pseudo-dreidimensionales Bildanzeigesystem mit einer Mehrzahl der pseudo-dreidimensionalen Bildanzeigevorrichtungen (100) nach Anspruch 4, wobei jede Steuerung (7) so ausgelegt ist, dass sie die zugehörige Lichtbeleuchtung (6) und Drehantriebsquelle (2) so steuert, dass der betreffende drehbare Teil (51) mit dem ausgestrahlten Licht unterschiedlich beleuchtet und die Drehzahl jedes drehbaren Teils (2) anders gesteuert wird.

14. Vorrichtung nach Anspruch 3, wobei der drehbare Teil (51) eine Form ähnlich einem vertikalen Schnitt durch die äußere Flamme einer brennenden Kerze und der Darstellteil (52) eine Form ähnlich einem vertikalen Schnitt durch die innere Flamme der brennenden Kerze hat.

15. Vorrichtung nach einem der Ansprüche 3 bis 14, wobei das Bild eine auf einer Flamme oder einem Spielzeug modellierte Figur; eine Zeichentrickfigur; eine bildähnliche Figur; eine musterartige Figur; eine Figur gemäß japanischen Zeichen, ein chinesische Figur, Phonogramme oder Buchstaben; oder eine Darstellung wie ein Richtungspfeil enthält.

16. Vorrichtung nach Anspruch 3, wobei der Darstellteil (52) symmetrisch oder asymmetrisch zu einer vorbestimmten Geraden ist.

17. Verfahren zur Darstellung eines pseudo-dreidimensionalen Bildes, wobei:
eine drehbare Schirmeinheit (5) mit einem drehbaren Teil (51), das ein auf einem Darstellteil (52) angebrachtes Bild trägt, gedreht wird; und
die drehbare Schirmeinheit (5) mit von einer Lichtbeleuchtung (6) abgestrahltem Licht beleuchtet wird, wobei die Lichtbeleuchtung unterhalb des Darstellteils und um dieses herum angeordnet ist, um den Darstellteil (52) aufwärtsgerichtet zu beleuchten;
wobei das Bild in einem durch die Rotation der rotierenden Schirmeinheit definierten Rotationsbereich ein stereoskopisch dargestelltes pseudo-dreidimensionales Bild erzeugt und der Rotationsbereich die Rotationsachse des drehbaren Teils (51) beinhaltet.

18. Vorrichtung nach Anspruch 1 oder 2, wobei das Bild eine Präsentationsfigur enthält, und das dargestellte pseudo-dreidimensionale Bild eine dreidimensionale Abbildung der Präsentationsfigur ist.

19. Vorrichtung nach Anspruch 18, wobei die Präsentationsfigur symmetrisch oder asymmetrisch bezüglich einer vorbestimmten Achse ist, die im Wesentlichen mit der Rotationsachse übereinstimmt.

## Revendications

1. Appareil d'affichage d'image pseudo tridimensionnelle (100) comprenant :
une unité d'écran rotative (5) ayant une partie rotative (51) supportant une image sur sa partie de présentation (52) de caractère ;
une source d'entraînement rotative (2) pour entraîner en rotation l'unité d'écran rotative (5) afin de définir ainsi une zone de rotation contenant l'axe de rotation de la partie rotative (51) ; et
une source de lumière (6) pour éclairer l'unité d'écran rotative (5) avec de la lumière,
dans lequel ladite image est agencée pour former une image pseudo tridimensionnelle dans la zone de rotation lorsque l'unité d'écran rotative (5) est entraînée en rotation tout en étant éclairée avec la lumière.

2. Appareil selon la revendication 1, dans lequel l'axe de rotation s'étend dans une direction s'étendant vers le haut et vers le bas.

3. Appareil selon la revendication 1, comprenant :
un corps en forme de boîtier (1) agencé pour contenir la source d'entraînement rotative (2) ;
un contrôleur (7) pour contrôler la source d'entraînement rotative (2) et la source lumineuse (6) ; et
une alimentation de courant électrique (75) pour la source d'entraînement rotative (2) ;
dans lequel la partie rotative (51) est raccordée à un arbre de sortie (3) de la source d'entraînement rotative (2) ; et
la source lumineuse (6) est fixée sur le corps (1) et raccordée à l'alimentation de courant électrique (45) afin d'être positionnée autour et au-dessous de la partie de présentation de caractère (52) et pour éclairer vers le haut la partie de présentation de caractère (52) avec la lumière émise par la source lumineuse (6) ;
moyennant quoi l'image pseudo tridimensionnelle est affichée de manière stéréoscopique dans la zone de rotation lorsque la partie de présentation de caractère (52) est éclairée avec la lumière émise par la source lumineuse (6) et que l'unité d'écran rotative (5) tourne.

4. Appareil selon la revendication 3, dans lequel la partie rotative (51) est en forme de plaque et lorsqu'elle tourne, sa zone de rotation est cylindrique.

5. Appareil selon la revendication 4, dans lequel la partie rotative (51) comprend un élément fin de type plaque ou un élément fin de type plaque en forme de croix.

6. Appareil selon la revendication 5, dans lequel la partie de présentation de caractère (52) est directement affichée ou fixée sur l'élément fin de type plaque ou l'élément fin de type plaque en forme de croix.

7. Appareil selon la revendication 4, dans lequel la partie de présentation de caractère (52) comprend une image et la partie rotative (51) est composée d'une carte découpée pour avoir la même forme que l'image.

8. Appareil selon la revendication 4, dans lequel la source lumineuse (6) comprend deux à quatre émetteurs de lumière agencés à un intervalle angulaire sensiblement identique.

9. Appareil selon la revendication 8, dans lequel chaque émetteur de lumière est agencé pour émettre sélectivement de la lumière ayant l'une des trois couleurs primaires, le contrôleur (7) étant agencé pour contrôler un cycle grâce auquel la lumière de couleur primaire émise par un émetteur de lumière est sélectionnée.

10. Appareil selon la revendication 4, dans lequel la partie rotative (51) comprend des premier et second éléments de porte (54, 55), les premier et second éléments de porte (54, 55) pouvant s'ouvrir en les faisant coulisser l'un par rapport à l'autre sous l'action d'une force centrifuge de sorte que la partie de présentation de caractère (52) est affichée lorsque la partie rotative (51) tourne, et les premier et second éléments de porte (54, 55) étant agencés pour recouvrir la partie de présentation de caractère (52) lorsque les premier et second éléments de porte (54, 55) sont fermés.

11. Appareil selon la revendication 4, dans lequel le corps (1) est formé comme une ampoule et est prévu avec une base métallique (31) agencée pour être vissée dans une douille d'ampoule, la base métallique (31) étant prévue au niveau d'une extrémité opposée du corps (1), sur l'arbre de sortie (3).

12. Appareil selon l'une quelconque des revendications 4 à 11, dans lequel l'alimentation de courant électrique (75) et le contrôleur (7) sont agencés dans le corps (1).

13. Système d'affichage d'image pseudo tridimensionnelle comprenant une pluralité d'appareils d'affichage d'image pseudo tridimensionnelle (100) selon la revendication 4, dans lequel chaque contrôleur (7) est agencé pour contrôler respectivement sa source lumineuse (6) respective et la source d'entraînement rotative (2) de sorte que chaque partie rotative (51) est éclairée différemment avec la lumière émise et le nombre de rotations de chaque partie rotative est contrôlé différemment.

14. Appareil selon la revendication 3, dans lequel la partie rotative (51) a sa forme similaire à une forme en coupe verticale d'une flamme externe d'une bougie allumée et la partie de présentation de caractère (52) a sa forme similaire à une forme en coupe verticale d'une flamme interne de la bougie allumée.

15. Appareil selon l'une quelconque des revendications 3 à 14, dans lequel l'image comprend un caractère modelé sur une flamme ou un jouet ; un personnage de dessins animés ; un caractère en forme d'image ; un personnage en forme de modèle ; un caractère tel que des caractères japonais, des caractères, phonogrammes ou lettres chinois ; ou un caractère tel qu'une flèche indiquant une direction.

16. Appareil selon la revendication 3, dans lequel la partie de présentation de caractère (52) est symétrique ou asymétrique par rapport à une ligne prédéterminée.

17. Procédé pour afficher une image pseudo tridimensionnelle, le procédé comprenant les étapes consistant à :
faire tourner une unité d'écran rotative (5) comprenant une partie rotative (51) supportant une image sur sa partie de présentation de caractère (52) ; et
éclairer l'unité d'écran rotative (5) avec la lumière émise par une source lumineuse (6) située autour et au-dessous de la partie de présentation de caractère (52) pour éclairer ainsi vers le haut la partie de présentation de caractère (52) ;
moyennant quoi ladite image forme une image pseudo tridimensionnelle qui est affichée de manière stéréoscopique dans une zone de rotation définie par la rotation de l'unité d'écran rotative, la zone de rotation comprenant l'axe de rotation de la partie rotative (51).

18. Appareil selon la revendication 1 ou 2, dans lequel l'image comprend un caractère de présentation, et l'image pseudo tridimensionnelle affichée est une image tridimensionnelle du caractère de présentation.

19. Appareil selon la revendication 18, dans lequel le caractère de présentation est symétrique ou asymétrique par rapport à un axe prédéterminé, l'axe prédéterminé coïncidant sensiblement avec l'axe de rotation.
